(19) Europäisches Patentamt
European Patent Office
Office européen des brevets

(11) EP 0 870 738 B1

(12) FASCICULE DE BREVET EUROPEEN

(45) Date de publication et mention de la délivrance du brevet: **25.07.2001 Bulletin 2001/30**

(51) Int Cl.[7]: **C04B 7/42**, C04B 7/24

(21) Numéro de dépôt: **98400799.7**

(22) Date de dépôt: **03.04.1998**

(54) **Procédé pour l'élimination d'acides sulfureux résiduaires de traitement industriel et pour l'obtention de produits stables**

Verfahren zur Eliminierung von Abfallprozess schwefligen Säuren und zur Erzeugung stabilen Produkten

Method for the elimination of waste sulfurous acids from industrial process and for obtaining stable products

(84) Etats contractants désignés:
**BE DE ES FR GB GR IT PT**

(30) Priorité: **08.04.1997 FR 9704295**

(43) Date de publication de la demande:
**14.10.1998 Bulletin 1998/42**

(73) Titulaire: **Carrières du Boulonnais**
**62250 Ferques (FR)**

(72) Inventeur: **Beauvent, Guy**
**62720 Wierre Effroy (FR)**

(74) Mandataire: **Coester, Jacques Charles**
**Cabinet Madeuf**
**56 A, rue du Faubourg Saint-Honoré**
**75008 Paris (FR)**

(56) Documents cités:
**WO-A-96/33133**

- **DATABASE WPI Week 8245, Derwent Publications Ltd., London, GB; AN 82-97211E, XP002051234 & SU 897 739 A (CEMENT IND RES INST)**
- **DATABASE WPI Week 8317, Derwent Publications Ltd., London, GB; AN 83-41235K, XP002051235 & SU 937 390 A (CEMENT IND RES INST ET AL.)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 870 738 B1

Printed by Jouve, 75001 PARIS (FR)

## Description

La présente invention concerne le traitement d'acides sulfuriques résiduaires provenant d'usines de traitement de matériaux divers, notamment de matières premières contenant de l'oxyde de titane, et servant à la production de $TiO_2$ industriel.

Dans l'application ci-dessus de même que dans la plupart de celles relatives aux acides sulfureux de grandes quantités d'effluents acides doivent être évacuées ou traitées.

Un retraitement implique généralement une concentration des acides dilués et une séparation d'éléments polluants tels que des fluorures, des oxydes de métaux lourds, des résidus alumineux, etc.

De tels traitements sont extrêmement onéreux et peu satisfaisants puisque les acides dilués ne peuvent pas être concentrés facilement et ne peuvent pas être recyclés un grand nombre de fois et que l'élimination des matières polluantes séparées reste entière.

La présente invention permet la récupération complète des acides résiduaires et la mise en oeuvre du produit obtenu avec des matières minérales obtenues par ailleurs et de façon avantageuse à partir d'autres produits de rejet, notamment à partir de boues de carrière, de scories d'aciérie et d'autres déchets.

L'association des produits obtenus dans le cadre de l'invention permet ensuite la fabrication de matières de base notamment de produits stables de construction et d'inertage ne présentant que peu ou pas de retrait et une bonne résistance mécanique de l'ordre de 40 à 50 MPa dans le cours d'un cycle de prise de l'ordre de 28 jours.

En outre, les produits réalisés à partir de l'invention rendent possible l'encapsulage de métaux lourds, notamment de l'oxyde de zinc, ce qui est rendu possible par la très faible porosité des produits réalisés selon l'invention.

Conformément à l'invention, selon le procédé pour l'élimination d'acides sulfureux résiduaires de traitement industriel et pour l'obtention de produits stables, on prépare, d'une part, un cru de ciment bélitique et on neutralise, d'autre part, les acides sulfureux résiduaires au moyen au moins de fines argilo-calcaires qui sont ainsi transformées en gypse et on additionne le gypse artificiel obtenu au cru de ciment bélitique pour en régler la teneur en $SO_3$ de façon à donner un clinker à temps de prise variable selon la teneur en $SO_3$, ainsi que les autres propriétés physico-chimiques.

Diverses autres caractéristiques de l'invention ressortent d'ailleurs de la description détaillée qui suit.

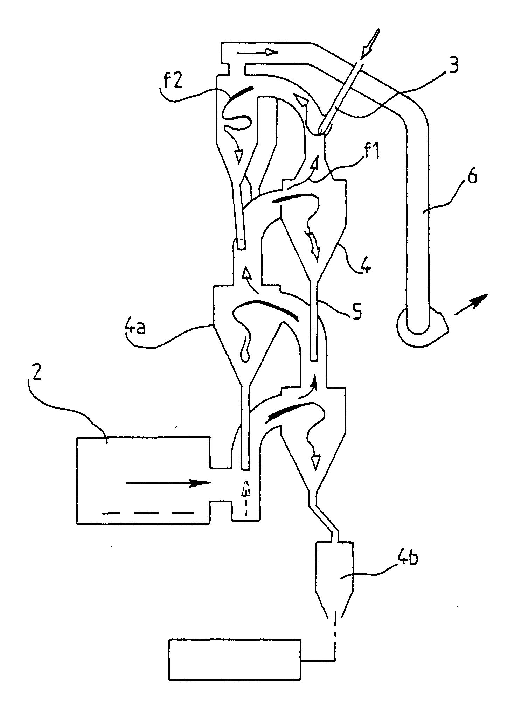

Une vue de réalisation d'un four de traitement pour la mise en oeuvre du procédé de l'invention est illustrée à la figure unique.

Dans le procédé de l'invention, on mélange les différents acides sulfureux résiduaires dilués ($SO_2$, $SO_3$, $SO_4H_2$) résultant des traitements, notamment des traitements à l'acide sulfurique, tels que les traitements d'anodisation de l'aluminium, les traitements de dépôt électrolytique de zinc et autres traitements analogues, etc. Lesdits acides ci-dessus se trouvent en solution aqueuse à faible concentration de l'ordre de 1 à 35 % de préférence voisin de 10 % en fin de traitement. Ils peuvent contenir des déchets divers.

Les acides résiduaires ci-dessus sont notamment chargés de déchets contenant de l'alumine, du zinc et d'autres métaux ou oxydes métalliques.

Dans le procédé de l'invention les acides résiduaires sont amenés à réagir sur des fines argilo-calcaires, par exemple à des fines contenant 50 à 90 % de $CaCO_3$. De telles fines sont, par exemple, obtenues à partir du lavage de pierres calcaires concassées, de fines de sciage, etc..

L'action des acides résiduaires ci-dessus sur les fines a pour effet de neutraliser ces acides et de transformer lesdites fines en gypse artificiel ou autres combinaisons minérales telles qu'un anhydrite.

De préférence, le cru composé de fines argilo-calcaires, de résidus et de fines argilo-calcaires utilisées pour neutraliser les acides résiduaires est traité dans un granulateur pour réaliser des granulats de 0,2 à 2 mm.

Par ailleurs, on prépare un cru de ciment bélitique en utilisant notamment des résidus de lavage de pierres calcaires contenant environ :

20-30 % de $CaCO_3$
30-50 % d'argile
5-25 % de $SiO_2$
5-25 % d'$Al_2O_3$ en résidus
5-50 % de déchets divers

pouvant être constitués par des oxydes métalliques tels que l'oxyde de magnésium, de fer, de titane, etc., auxquels on ajoute les fines de gypse artificiel.

Les fines ci-dessus sont elles-mêmes traitées dans un granulateur ou par extrusion puis thermiquement dans une enceinte de décarbonatation jusqu'à une température généralement voisine de 900°C afin de réduire le $CaCO_3$ en CaO et $CO_2$. Cette partie de l'installation peut être utilisée en l'état pour produire de la chaux dite flash à partir de fines riches en $CaCO_3$.

Les fines décarbonatées sont alors portées jusqu'à une température de l'ordre de 1200°C pour obtenir des formes cristallisées à propriétés hydrauliques de $(CaO)_2(SiO_2)\beta$ généralement désignée par C2Sβ, $C_4A_3\overline{S}$, $C_4AF$, etc.

Une caractéristique de l'invention consiste à mélanger le cru obtenu au gypse déjà obtenu par ailleurs, à partir de la neutralisation des acides résiduaires traités de façon à favoriser l'obtention de sulfoaluminates se formant à partir de 1200°C environ, de manière à obtenir un clinker.

L'addition de gypse au clinker broyé s'effectue dans une proportion dépendant de la rapidité de prise du ciment devant être obtenu et est normalement comprise entre 4 et 20 % de façon à obtenir une teneur en

sulfoaluminate de calcium $C_4A_3\bar{S}$ de l'ordre de 5 à 60 %.

Dans le cours de la fabrication du gypse artificiel issu de la neutralisation des acides résiduaires, il est possible d'ajouter des charges de matières polluantes, par exemple des oxydes de métaux lourds, notamment l'oxyde de zinc, de chrome, de titane, de cadmium, etc... et de mélanger le gypse au ciment à prise lente, ce qui permet la réalisation de produits de construction, notamment de parpaings et analogues à prise très rapide, le ciment obtenu étant sans retrait ou pratiquement sans retrait.

Lorsque le gypse est mélangé au clinker, puis broyé, on obtient un produit capable d'inerter, c'est-à-dire de rendre non polluant, des métaux lourds par encapsulage à froid en se basant sur les propriétés d'expansion et sans retrait de ces liants. Il est également possible de réaliser des éléments de construction sous forme de parpaings, etc... en se basant sur les propriétés de prise rapide.

Dans une variante pouvant être mise en oeuvre dans des sites sidérurgiques il a été trouvé avantageux d'ajouter au cru formé pour les fines argilo-calcaires traitées à l'acide résiduaire mélangées aux fines argilo-calcaires et aux boues contenant des composés alumineux des scories d'aciérie dans une proportion de 10 à 40 %. Des scories contenant 50 % de CaO, 12 % d'oxyde de fer, 12 % de silice et des résidus métalliques se sont révélées particulièrement appropriées en permettant d'économiser l'énergie du fait de l'élimination du $CO_2$ et l'amenée de fer permettant l'obtention de ciments ferro-alumineux bélitiques comprenant des sulfoaluminates. L'ajout au cru de polluants contenant des fluorures permet en outre une meilleure minéralisation et un gain de ± 100°C sur la température de calcination.

Bien que différents types de four puissent être mis en oeuvre pour l'obtention du sulfo-alumineux bélitique et la calcination du cru décrit, il est avantageux, comme l'illustre le dessin, de mettre en oeuvre un four à colonne montante 1 et à recyclage comportant un ou des brûleurs 2 constitués eux-mêmes par exemple par un ou des fours et permettant de développer une température de l'ordre de 1200°C dans la colonne montante dans laquelle on fait circuler les fines issues des granulats de boues et les granulats injectés en tête par un conduit 3 menant à un cyclone 4 débouchant sur un conduit de réinjection 5 menant à un second cyclone 4a, etc.

Les produits ainsi traités sont réinjectés à contre-courant comme indiqué par les flèches $f_1$, $f_2$ pour assurer une circulation à contre-courant.

Lorsque les produits doivent être soumis à une vitrification à température plus élevée supérieure à 1200°C, ils sont dérivés, par exemple du cyclone 4b, pour être amenés à passer dans un autre four de même type ou de réalisation différente, par exemple à plasma ou analogue, rotatif ou autre.

Lorsque des déchets industriels ou ménagers sont utilisés pour le chauffage, ce sont le ou les brûleurs 2 qui les consument et qui peuvent évidemment faire partie intégrante du four s'il est d'un autre type que le four à colonne montante illustré au dessin.

Lorsqu'il y a lieu de procéder à un traitement à très haute température par exemple supérieur à 1200°C, il est avantageux de prévoir, dans le four principal par exemple à l'intérieur de la colonne montante, une cavité de four secondaire dans laquelle le produit à traiter ou la fraction de produit à traiter est amené, cette cavité de four secondaire étant préchauffée par le four principal et la source de chaleur complémentaire, par exemple une torche à plasma, n'intéressant que l'intérieur de la cavité dudit four complémentaire.

La disposition combinée de deux ou plus de deux fours est réalisable également lorsque le four principal est un four à grille ou un four à lit fluidisé ou d'un autre type pour permettre l'utilisation simultanée des calories provenant de déchets. Cette disposition ne nécessite ainsi un apport de calories chères que pour une élévation de températures relativement faible comprise entre celle du four principal et celle du four secondaire utilisé pour la calcination à température élevée.

Subsidiairement, il est avantageux de traiter les gaz de combustion au moins dans le four principal pour les abattre au moyen d'une chaux produite dans l'installation à certains moments de l'année afin notamment d'assurer l'absorption de $SO_2/SO_3$ qui est ensuite recyclé comme expliqué pour l'obtention de gypse artificiel.

L'invention n'est pas limitée aux exemples de réalisation, représentés et décrits en détail, car diverses modifications peuvent y être apportées sans sortir de son cadre.

## Revendications

1. Procédé pour l'élimination d'acides sulfureux résiduaires de traitement industriel et pour l'obtention de produits stables, caractérisé en ce qu'on prépare, d'une part, un cru de ciment bélitique et en ce qu'on neutralise, d'autre part, les acides sulfureux résiduaires au moyen au moins de fines argilo-calcaires qui sont ainsi transformées en gypse, et en ce qu'on additionne le gypse obtenu au cru de ciment bélitique pour en régler la teneur en $SO_3$ de façon à donner un clinker à temps de prise variable selon la teneur en $SO_3$, ainsi que les autres propriétés physico-chimiques.

2. Procédé suivant la revendication 1, caractérisé en ce que les acides résiduaires sont des acides sulfureux dilués contenant de 1 à 35 % d'acide.

3. Procédé suivant l'une des revendications 1 et 2, caractérisé en ce que le cru composé de fines argilo-calcaires, de résidus et de fines argilo-calcaires utilisées pour neutraliser les acides résiduaires est traité dans un granulateur pour réaliser des granulats de 0,2 à 2 mm.

**4.** Procédé suivant l'une des revendications 1 à 3, caractérisé en ce que le cru de ciment bélitique est obtenu à partir de fines contenant du $CaCO_3$, de l'argile, du $SiO_2$ de l'$Al_2O_3$ et de l'$Al(OH)_3$.

**5.** Procédé suivant l'une des revendications 1 à 4, caractérisé en ce que les granulats pour la fabrication du cru de ciment bélitique sont tout d'abord chauffés jusqu'à environ 900°C pour l'obtention de chaux, puis les granulats restants sont portés à une température voisine de 1200°C pour provoquer la cristallisation conduisant à l'obtention de C2Sß, de $C_4A_3\bar{S}$, de $C_{12}$ $A_7$ et autres composés.

**6.** Procédé suivant l'une des revendications 1 à 5, caractérisé en ce qu'on ajoute des fluorures au cru formé par les constituants du ciment à prise lente additionné de gypse.

**7.** Procédé suivant l'une des revendications 1 à 5, caractérisé en ce qu'on ajoute des scories d'aciérie dans une proportion comprise entre 10 et 40 %.

**8.** Procédé suivant l'une des revendications 1 à 6, caractérisé en ce que le cru de ciment bélitique est préparé en utilisant des résidus de lavage de pierres calcaires contenant environ :

20-30 % de $CaCO_3$
30-50 % d'argile
5-25 % de $SiO_2$
5-25 % d'$Al_2O_3$ en résidus
5-50 % de déchets divers

pouvant être constitués par des oxydes métalliques tels que l'oxyde de magnésium, de fer, de titane, etc., auxquels on ajoute les fines de gypse artificiel.

## Claims

**1.** Method for the elimination of waste sulfurous acids from industrial process and for obtaining stable products, characterized in preparing, on the one hand, belitic cement crude products and in neutralyzing, on the other hand, the waste sulfurous acids by means at least of argillo-calcareous fines which are thus transformed into gypsum and in adding the so obtained gypsum to the belitic cement for adjusting its $SO_3$ content in order to give a klinker with a setting time which varies according to the $SO_3$ content, as well as the other physico-chemical properties.

**2.** Method according to claim 1, characterized in that the waste acids are diluted sulfurous acids containing from 1 to 35% of acid :

**3.** Method according to one of claims 1 and 2, characterized in that the crude product comprising argillo-calcareous fines, waste products and argillo-calcareous fines used for neutralizing the waste acids is treated in a granulator for making granulates of 0.2 to 2 mm.

**4.** Method according to one of claims 1 to 3, characterized in that the belitic cement crude product is obtained from fines which contain $CaCO_3$, clay, $SiO_2$, $Al_2O_3$ and $Al(OH)_3$.

**5.** Method according to one of claims 1 to 4, characterized in that the granulates for the manufacture of the belitic ciment crude product are first of all heated up to about 900°C for obtaining a lime product, then the remaining granulates are raised to a temperature of about 1200°C for causing the cristallization leading to obtention of $C_2S\beta$, $C_4A_3\bar{S}$, $C_{12}A_7$ and other compounds.

**6.** Method according to one of claims 1 to 5, characterized in adding fluorides to the crude product formed by the constituents of the low setting time cement added with gypsum.

**7.** Method according to one of claims 1 to 5, characterized in adding some slags in an amount comprised between 10 and 40%.

**8.** Method according to one of claims 1 to 6, characterized in that the belitic cement is prepared by using calcareous stone washing residues containing about:
20-30% of $CaCO_3$ 30-50% of clay 5-25% of $SiO_2$ 5-25% of $Al_2O_3$ in residues 5-50% of various waste products.
which may be formed by metal oxides such as magnesium oxide, iron oxide, titanium oxide, etc.., to which artificial gypsum fines are added.

## Patentansprüche

**1.** Verfahren zur Beseitigung von bei technischen Prozessen anfallenden Restschwefelsäuren und zum Erhalt von stabilen Produkten, dadurch gekennzeichnet, daß man einerseits Belitzement-Rohmaterial herstellt und andererseits die Restschwefelsäuren zumindest mit tonhaltigen Kalkstein-Feinanteilen neutralisiert, welche dabei in Gips übergehen, und den erhaltenen Gips dem Belitzement-Rohmaterial zur Einstellung eines solchen $SO_3$-Gehalts zusetzt, daß sich ein Klinker mit entsprechend dem $SO_3$-Gehalt variabler Abbindezeit sowie anderen physikalisch-chemischen Eigenschaften ergibt.

2. Verfahren nach Anspruch 1, dadurch gekennzeichnet, daß es sich bei den Restsäuren um verdünnte Schwefelsäuren mit einem Säuregehalt von 1 bis 35% handelt.

3. Verfahren nach Anspruch 1 oder 2, dadurch gekennzeichnet, daß man das aus tonhaltigen Kalkstein-Feinanteilen, Rückständen und zur Neutralisation der Restsäuren verwendeten tonhaltigen Kalkstein-Feinanteilen bestehende Rohmaterial zur Herstellung von Granulat mit einer Korngröße von 0,2 bis 2 mm in einem Granulator behandelt.

4. Verfahren nach einem der Ansprüche 1 bis 3, dadurch gekennzeichnet, daß das Belitzement-Rohmaterial aus $CaCO_3$, Ton, $SiO_2$, $Al_2O_3$ und $Al(OH)_3$ enthaltenden Feinanteilen erhalten wird.

5. Verfahren nach einem der Ansprüche 1 bis 4, dadurch gekennzeichnet, daß man das Granulat zur Herstellung des Belitzement-Rohmaterials zunächst zur Erzeugung von Kalk auf etwa 900°C erhitzt und dann das restliche Granulat auf eine Temperatur von ungefähr 1200°C bringt und dadurch Kristallisation unter Erhalt von C2Sβ, $C_4A_3\bar{S}$, $C_{12}A_7$ und anderen Verbindungen bewirkt.

6. Verfahren nach einem der Ansprüche 1 bis 5, dadurch gekennzeichnet, daß man dem aus den Bestandtailen des mit Gips versetzten, langsam abbindenden Zements gebildeten Rohmaterial Fluoride zusetzt.

7. Verfahren nach einem der Ansprüche 1 bis 5, dadurch gekennzeichnet, daß man Stahlwerksschlakken in einem Anteil zwischen 10 und 40% zusetzt.

8. Verfahren nach einem der Ansprüche 1 bis 6, dadurch gekennzeichnet, daß das Belitzement-Rohmaterial unter Verwendung von Kalksteinwaschrückständen hergestellt wird, die ungefähr:

20-30% $CaCO_3$
30-50% Ton
5-25% $SiO_2$
5-25% $Al_2O_3$ aus Rückständen
5-50% diverse Abfälle,

die aus Metalloxidan wie Magnesiumoxid, Eisenoxid, Titanoxid usw. bestehen können, enthalten und denen man die Kunstgips-Feinanteile zusetzt.

f2
3
f1
6
4
5
4a
2
4b